# EUROPEAN PATENT SPECIFICATION

(11) **EP 1 196 315 B1**
(45) Date of publication and mention of the grant of the patent: **14.01.2004**
(21) Application number: 00948086.4
(22) Date of filing: 14.07.2000
(51) Int. Cl.: B62M 1/04

(54) **DRIVE SYSTEM**
ANTRIEBSSYSTEM
SYSTEME D'ENTRAINEMENT

(30) Priority: 17.07.1999 GB 9916761
(43) Date of publication of application: 17.04.2002
(73) Proprietor: WIELKOPOLSKI, Thomas, William, Tauton TA4 3QA (GB)
(72) Inventor: WIELKOPOLSKI, Thomas, William, Tauton TA4 3QA (GB)
(74) Representative: Raynor, Simon Mark
(86) International application number: PCT/GB2000/002639
(87) International publication number: WO 2001/005647

(56) References cited:
- WO-A-96/22911
- DE-A- 4 404 831
- US-A- 5 419 572

## Description

The present invention relates to a drive system and in particular, but not exclusively, to a drive system for a bicycle. The drive system is also applicable to other human-powered vehicles and mechanisms. The invention also relates to a bicycle having a drive system.

The drive system used by conventional bicycles consists of a pair of rotating pedal cranks connected by a chain and sprockets to the rear wheel. This system has certain disadvantages. In particular, the tangential force the cyclist is able to exert on the pedals varies considerably according to the positions of the pedal cranks and is at a maximum only when the pedal cranks are approximately horizontal. This limits the efficiency and/or maximum power output of the cyclist.

DE 4404831 A describes a drive system including a drive link that is coupled by bearings to a crank and a tie rod. Drive is transmitted from the drive link through the crank to the wheels of a bicycle.

WO 96/22911 describes a drive mechanism for a bicycle, in which the pedals are attached to racks mounted for reciprocating movement.

It is an object of the present invention to provide a drive system that mitigates the aforementioned disadvantage. A further object of the present invention is to provide a bicycle having a drive system that enables the cyclist to provide a greater power output and/or to cycle more efficiently.

According to the present invention there is provided a drive system suitable for use in a bicycle, said drive system including a manually-operable means and a drive train connected to the manually-operable means for transferring drive from the manually-operable means to at least one of the bicycle wheels, wherein the manually-operable means is mounted for substantially rectilinear reciprocating movement on a lever system that includes a first lever having a first end connected to a first pivot and a second end that is rotatable about the first pivot, a second lever having a first end that is pivotably connected to the second end of the first lever and a second end to which the manually-operable means is attached, and a tie rod having a first end that is pivotably connected to a second pivot and a second end that is pivotably connected to the second lever between the first and second ends thereof; characterised in that the first lever is constructed and arranged for limited reciprocating rotation of the second end about the first pivot.

Although the drive system is suitable for use in a bicycle, it may also be used for driving other vehicles or mechanisms. It is not intended that the present invention is limited to drive systems for bicycles. The lever system produces the substantially rectilinear reciprocating movement of the manually-operable means, and is very efficient in operation.

The manually-operable means is preferably a pedal or a pair of pedals, although it may alternatively be a handle. Mounting the manually-operable means for substantially rectilinear reciprocating movement allows a very efficient input of energy into the drive system from the user, avoiding the inefficiencies of traditional rotating crank systems. A bicycle equipped with the drive system can therefore be ridden more quickly and/or with less effort.

Advantageously, the drive system includes two lever systems that are interconnected for opposed reciprocating movement, each lever system including a manually-operable means. This allows both feet, or both hands, to be used to drive the system with alternating strokes.

The drive system may include a hydraulic drive pump that is connected to a third pivot and to the first lever between the first and second ends thereof, for actuation by pivoting movement of the first lever. The system may also include an adjuster device for adjusting the position of the third pivot relative to the first pivot, to adjust the stroke length of the cylinder. Advantageously, the adjuster device is a hydraulic adjuster. The hydraulic drive pump may be connected through a hydraulic circuit to a hydraulic motor.

The use of a hydraulic drive train allows drive to be transferred efficiently to the wheels, while adjusting stroke length of the hydraulic pump provides a simple method of adjusting the gearing effect of the drive system. If a hydraulic adjuster is used, an automatic or semiautomatic gearing system can be provided. While a hydraulic drive train is preferred, the drive train may alternatively be entirely mechanical.

Advantageously, the hydraulic drive motor is a variable capacity motor, which allows the gearing effect of the drive system to be adjusted.

Advantageously, the drive system includes a plurality of hydraulic motors and means for connecting the motors into the hydraulic circuit individually, in series or in parallel, to adjust the gearing effect of the drive system.

According to another aspect of the present invention there is provided a bicycle having a drive system as described in the preceding paragraphs.

The bicycle may include a hydraulic drive train including at least one hydraulic motor for driving the rear wheel, the front wheel or both wheels of the bicycle. The bicycle may include a plurality of hydraulic motors that can be connected into the hydraulic circuit individually, in series or in parallel to adjust the gearing effect of the drive system.

Embodiments of the invention will now be described, by way of example, with reference to the accompanying drawings, in which:

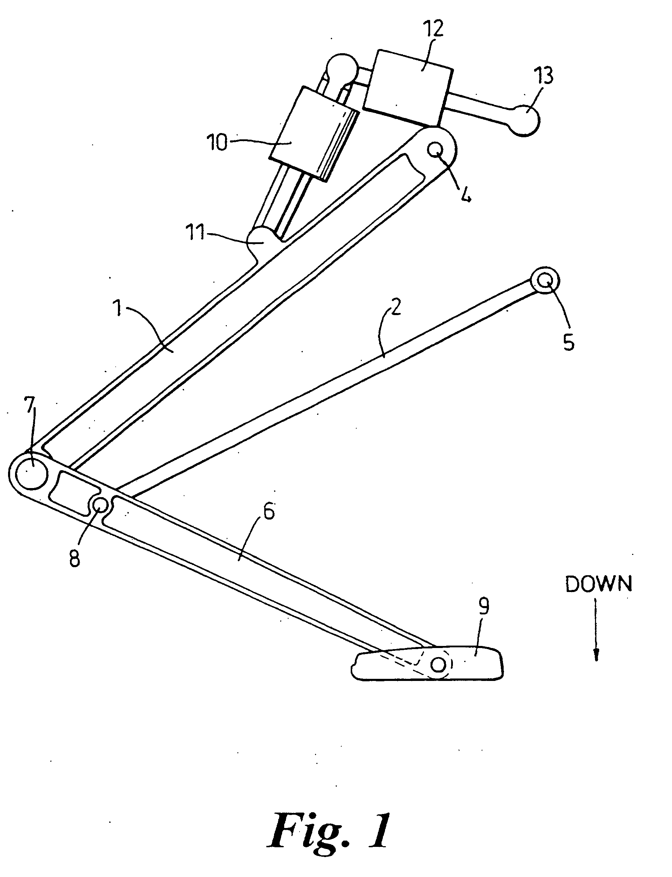

Fig. 1 is side view of a first embodiment of the drive system;

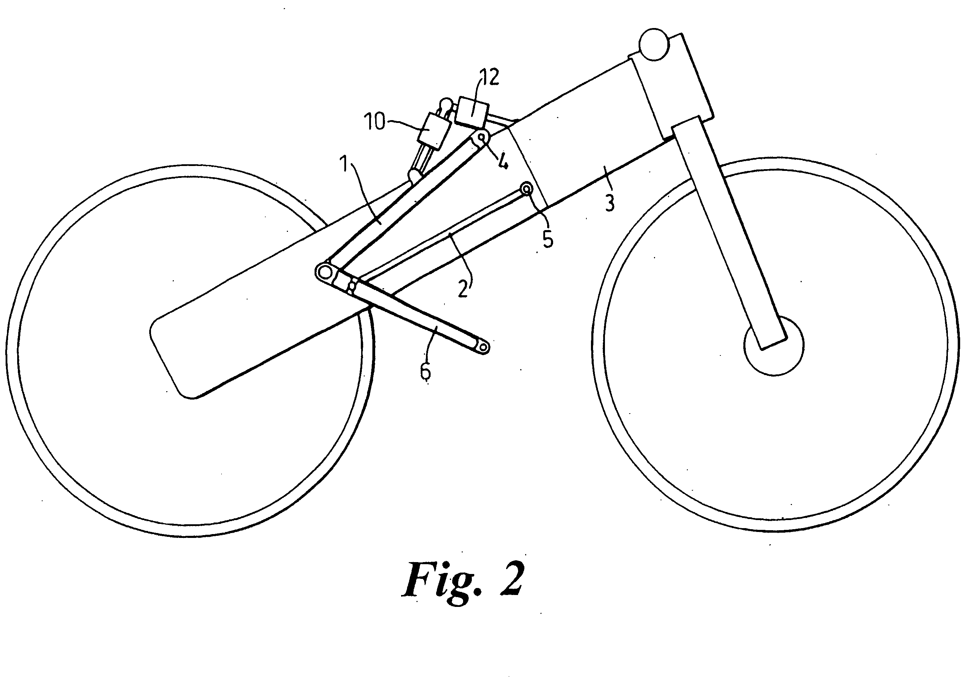

Fig. 2 is a side view of a bicycle having a drive system as shown in Fig. 1;
Fig. 3 is a hydraulic circuit diagram of a hydraulic drive train for use with the drive system;
Fig. 4 is an isometric view of a second drive system, not being an embodiment of the invention;
Fig. 5 is a front view of the second drive system;
Fig. 6 is a side view of the second drive system;
Fig. 7 is a top view of the second drive system; and
Fig. 8 is a sectional view of a variable displacement motor forming part of the drive system.

The invention relates to a drive system for bicycles or other pedal driven mechanisms. The system includes a first arm 1 and a second arm 2, which are attached to the bicycle frame 3 at their upper ends through first and second pivots 4,5. A lever 6 is attached to the lower ends of the first and second arms through third and fourth pivots 7,8, the third pivot 7 being located at one end of the lever 6 and the fourth pivot 8 being located between the ends of the lever, close to the third pivot 7. A pedal 9 is attached to the free end of the lever 6, the arrangement being such that the pedal can move up and down substantially linearly, as indicated by the arrow labelled "down". All these items may be duplicated in a symmetrical fashion for a second pedal.

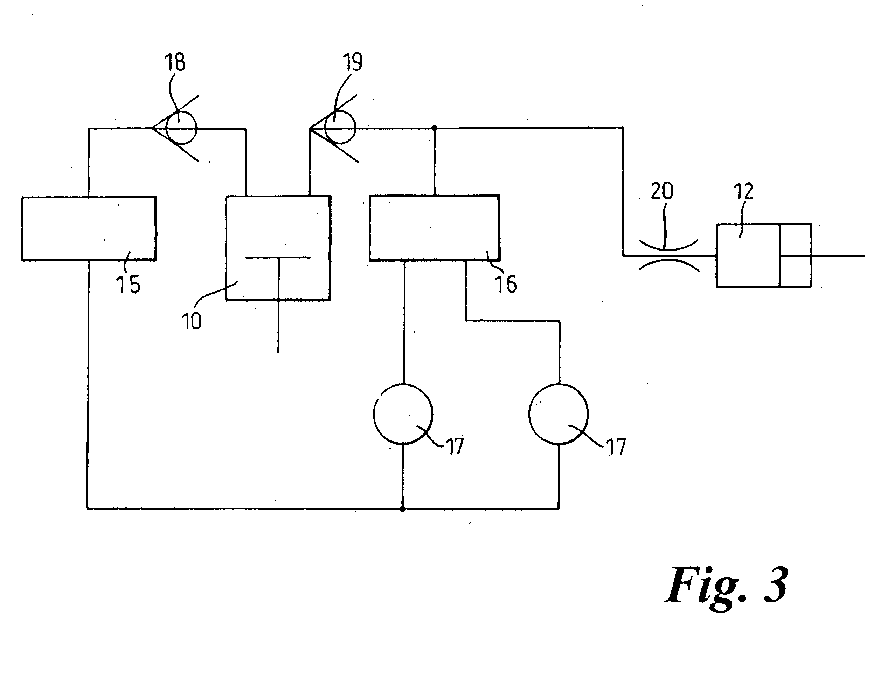

The first arm 1 is attached to a drive train to turn the wheels or drive the mechanism. In a preferred arrangement of the design the drive train consists of a hydraulic drive cylinder 10, which is attached at its lower end to a pivot 11 on the first arm 1, located between its ends. The hydraulic drive cylinder 10 is attached at its upper end to the frame 3 and a hydraulic adjuster 12. The hydraulic adjuster 12 is also attached to the frame 3 through a pivot 13 and may be actuated to adjust the position of the upper end of the drive cylinder relative to the frame. The hydraulic drive cylinder pumps oil around a hydraulic system. This system, which is shown in Fig. 3, has an oil reservoir 15 and a regulation system and a control system 16 and one or more hydraulic motors 17.

When a pressure is exerted on the pedal 9 the lever 6 moves in the direction labelled "down" and rotates around pivot 7 and the reaction through the second arm 2 forces the first arm 1 to rotate around pivot 4, driving the hydraulic drive cylinder 10, which is arranged to pump oil around the hydraulic system. When the pedal 9 reaches the end of possible movement it is so arranged to return to the start position at the opposite end of its range of movement. In so doing the hydraulic drive cylinder 10 is refilled with fluid and the cycle starts again. The components are so arranged that movement of the hydraulic adjuster 12 has the effect of varying the amount of oil pumped around the system, thereby providing a continuously (i.e. steplessly) variable gearing system. The adjuster may be arranged in such a way that the fluid in the drive system operates the adjuster so providing automatic adjustment of the gear ratios. Both sides may be connected together to ensure that the pedals move in opposite directions.

The hydraulic circuit may be arranged as shown in the diagram included here for clarity only. Fluid is drawn from the reservoir 15 through a one way valve 18 to the hydraulic cylinder 10 and pumped under pressure through another one way valve 19 to the control system 16 and so through motors 17 as required then returning to the reservoir. A small amount of fluid is passed into a second control system 20 to actuate the adjuster 12.

In alternative arrangements, the hydraulic components may be replaced by a gear, shaft or chain drive. In these arrangements provision will be made for relative movement of the pivots to provide a range of gear ratios.

The constituent parts are so arranged that the movement of the pedal and output is in relation to the force that can be exerted on the pedal. There is no point in the cycle that a full force cannot be output by the system. By aligning the direction of pedal movement with the input force the system makes more efficient use of the work energy available.

Various modifications ofthis drive system are possible. For example, the drive cylinder may be connected to the second arm instead of the first arm; the lever to which the pedal is attached may be curved rather than straight; and the whole mechanism may be oriented differently, for example when it is advantageous for the person operating the drive system to adopt a reclined position.

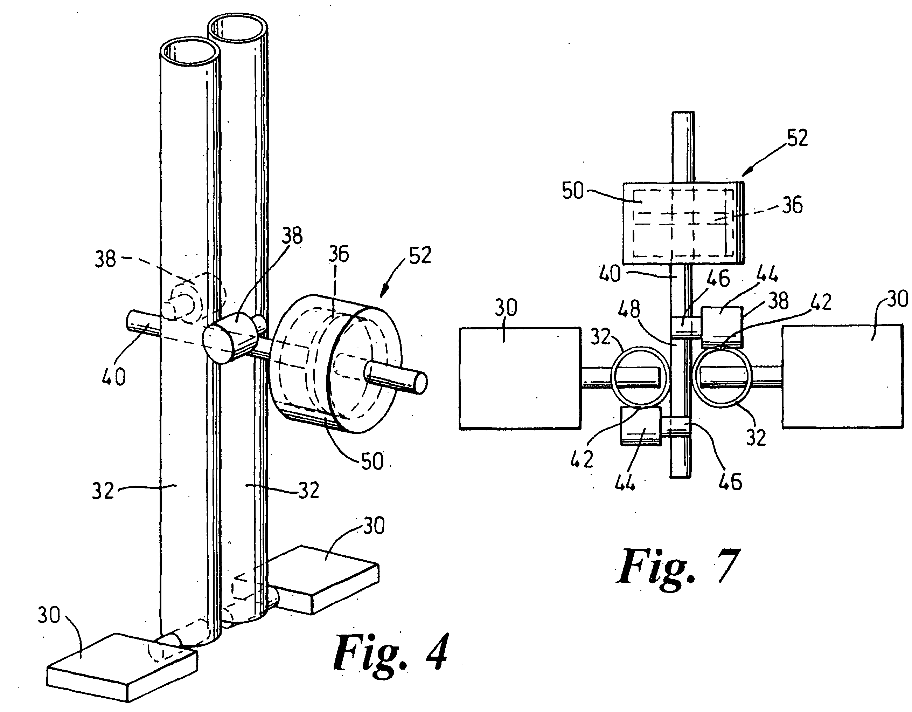

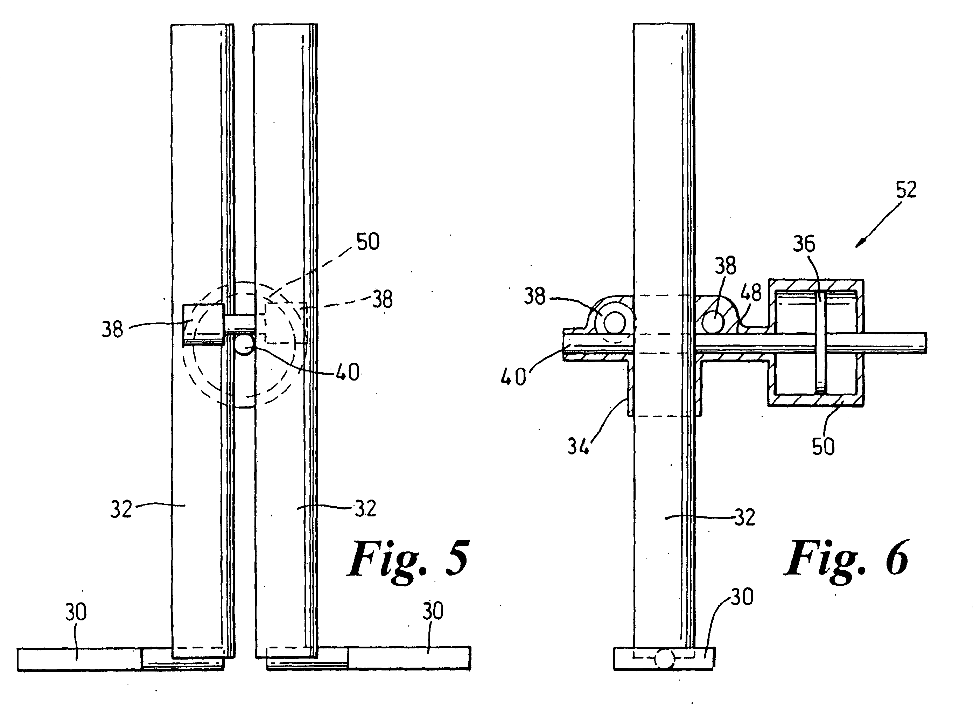

An alternative drive system, not being an embodiment of the claimed invention, is shown in Figs. 4 to 7. In this system, the pedals 30 are attached to the lower ends of two parallel pedal shafts 32, which are mounted for axial movement in a housing 34 and are connected to a hydraulic drive piston 36 through a pair of transfer gears 38 and a piston shaft 40. The housing is shown in Fig. 6 but is omitted from the other figures for clarity.

Each pedal shaft 32 is provided on one face with a gear rack 42: in the embodiment shown in the drawings the rack is provided on the rear face of the left-hand pedal shaft and on the front face of the right-hand pedal shaft.

The transfer gears 38 are mounted in the housing 34 with their axes perpendicular to the axes of the pedal shafts 32. Each transfer gear includes a large radius gear 44 at its outer end, which engages the rack 42 on the associated pedal shaft, and a smaller radius gear 46 at its inner end, which engages an associated gear rack 48 on the upper side of the piston shaft 40.

The piston shaft 40 is mounted for axial movement in the housing 34 and is connected at one end to the hydraulic drive piston 36, which with a cylinder 50 forms a hydraulic drive pump 52. The drive pump 52 is connected through a hydraulic circuit to a drive motor. The drive motor may be a variable displacement motor, to provide a gearing effect.

To operate the drive system, the pedals 30 are pushed upwards and downwards by the rider, causing the pedal shafts 32 to reciprocate. This reciprocating movement is transferred to the piston shaft 40 by the transfer gears 38, which also increase the force and reduce the amplitude of the movement. This drives the hydraulic pump 52, which in turn drives the motor.

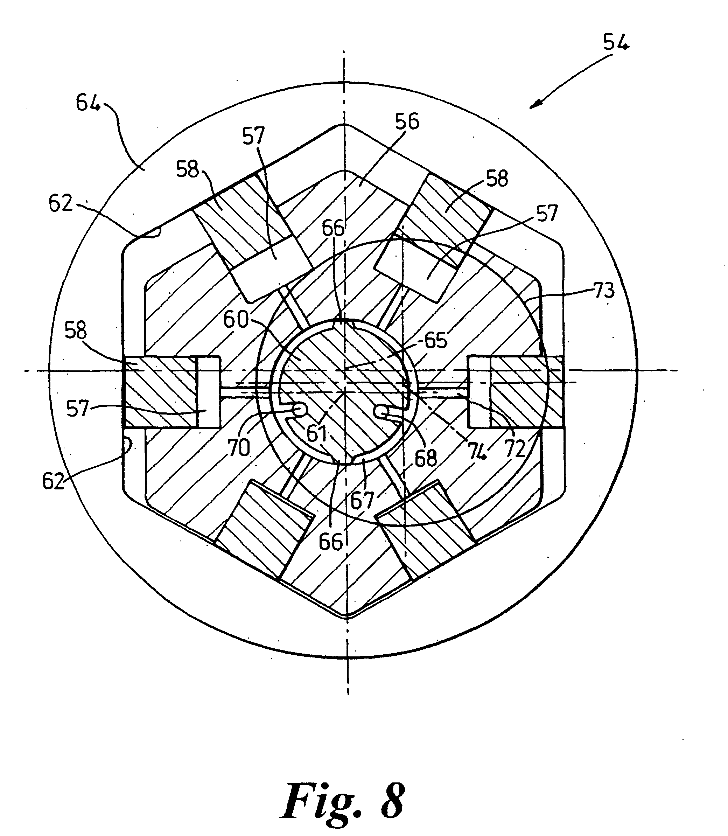

A suitable variable displacement motor 54 is shown in Fig. 8. The motor 54 includes a rotor 56 that is hexagonal in cross-section and has six cylinders 57 around its circumference, in each of which is mounted a piston 58. The rotor 56 is mounted for rotation on a fixed, non-rotatable shaft 60 having a shaft axis 61. The six pistons 58 slidingly engage the inner hexagonal walls 62 of an outer housing 64, which is mounted on a mounting plate (not shown) for rotation about a housing axis 65 with the rotor 56, and is drivingly connected to one or both of the bicycle wheels.

Sealing walls 66 are provided on the shaft 60, which divide the annular gap 67 between the shaft and the rotor 56 into two halves. Oil is fed to and drained from each half of this gap through an oil inlet opening 68 and an oil outlet opening 70 in the shaft 60. Vents 72 in the rotor 56 extend between the gap 67 and the cylinders 57, allowing oil to drive the pistons 58.

The shaft 60 is mounted on an eccentric 73 having an axis of rotation 74, which can be rotated to vary the separation between the shaft axis 61 and the housing axis 65. This allows the swept volume of the pump 54 to be varied, thereby adjusting the torque and the gearing ratio. Rotation of the eccentric may be limited by stops (not shown).

In operation, oil is supplied under pressure through the inlet opening 68 into the gap 67 between the shaft 60 and the rotor 56, and passes through the vents 72 into the three cylinders 57 located on the inlet side of the gap 67, so driving the pistons 58 in those cylinders outwards. At the same time, oil is exhausted from the three cylinders on the outlet side of the gap 67 and escapes through the outlet opening 70. The unbalanced force generated by the pistons creates a turning moment on the rotor, owing to the separation between the shaft axis 61 and the housing axis 65. The rotor 56 and the housing 64 therefore rotate about the shaft 60, driving the wheel or wheels of the bicycle.

By rotating the eccentric 73, the separation between the shaft axis 61 and the housing axis 65 can be varied to adjust the torque and gearing ratio. Rotation of the eccentric 73 may be controlled manually or automatically (for example, mechanically or hydraulically) to provide a self-regulating drive system.

Various modifications of the drive system are possible.

## Claims

1. A drive system suitable for use in a bicycle, said drive system including a manually-operable means (9) and a drive train connected to the manually-operable means for transferring drive from the manually-operable means (9) to at least one ofthe bicycle wheels, wherein the manually-operable means is mounted for substantially rectilinear reciprocating movement on a lever system that includes a first lever (1) having a first end connected to a first pivot (4) and a second end (7) that is rotatable about the first pivot, a second lever (6) having a first end that is pivotably connected to the second end of the first lever (1) and a second end to which the manually-operable means (9) is attached, and a tie rod (2) having a first end that is pivotably connected to a second pivot (5) and a second end that is pivotably connected to the second lever between the first and second ends thereof; **characterised in that** the first lever (1) is constructed and arranged for limited reciprocating rotation of the second end about the first pivot (4).

2. A drive system according to claim 1, wherein the manually-operable means (9) is a pedal.

3. A drive system according to claim 1 or claim 2, including two lever systems that are interconnected for opposed reciprocating movement, each lever system including a manually-operable means (9).

4. A drive system according to claim 3, including a hydraulic drive pump (10) that is connected to a third pivot and to the first lever (1) between the first and second ends thereof, for actuation by pivoting movement of the first lever.

5. A drive system according to claim 4, including means (12) for adjusting the position of the third pivot relative to the first pivot, to adjust the stroke length of the cylinder.

6. A drive system according to claim 5, including a hydraulic adjuster (12) for adjusting the position of the third pivot

7. A drive system according to any one of claims 4 to 6, wherein said hydraulic drive pump (10) is connected through a hydraulic circuit to a hydraulic motor (17).

8. A drive system according to claim 7, wherein said hydraulic drive motor (54) is a variable capacity motor.

9. A drive system according to claim 7, including a plurality of hydraulic motors (17) and means (16) for connecting the motors into the hydraulic circuit individually, in series or in parallel to adjust the gearing effect of the drive system.

10. A bicycle having a drive system as claimed in any one of the preceding claims.

11. A bicycle according to claim 10, including a hydraulic drive train that includes at least one hydraulic motor for driving one or both wheels of the bicycle.

## Patentansprüche

1. Ein Antriebssystem, welches zur Benutzung in einem Fahrrad geeignet ist, weist manuell betätigbare Mittel (9) und einen mit den manuell betätigbaren Mitteln (9) verbundenen Antriebsstrang auf, um den Antrieb von den manuell betätigbaren Mitteln (9) zu mindestens einem der Räder des Fahrrads zu übertragen, wobei die manuell betätigbaren Mittel (9) für eine im wesentlichen gradlinige, reziproke Bewegung an einem Hebelsystem befestigt ist, mit
- einem ersten Hebel (1) mit einem mit einem ersten Drehpunkt (4) befestigten ersten Ende und einem zweiten Ende (7), welches drehbar um den ersten Drehpunkt ist,
- einem zweiten Hebel (6) mit einem ersten Ende, welches drehbar mit dem zweiten Ende des ersten Hebels (1) verbunden ist und einem zweiten Ende an welchem das manuell betätigbare Mittel (9) befestigt ist, und
- einer Verbindungsstange (2) mit einem ersten Ende, welches drehbar mit einem zweiten Drehpunkt (5) verbunden ist, und einem zweiten Ende, welches drehbar mit dem zweiten Hebel zwischen dessen ersten und zweiten Ende verbunden ist.
**dadurch gekennzeichnet, dass** der erste Hebel (1) für eine begrenzte reziproke Drehung seines zweiten Endes um den ersten Drehpunkt ausgelegt und angeordnet ist.

2. Ein Antriebssystem nach Anspruch 1, **gekennzeichnet durch** ein Pedal als manuell betätigbares Mittel (9).

3. Ein Antriebssystem nach Anspruch 1 oder 2 mit zwei Hebelsystemen, die für entgegengesetzt reziproke Bewegungen verbunden sind, wobei jedes Hebelsystem ein manuell betätigbares Mittel (9) aufweist.

4. Ein Antriebssystem nach Anspruch 3 mit einer hydraulischen Antriebspumpe (10), die mit einem dritten Drehpunkt und mit dem ersten Hebel zwischen dessen ersten und zweiten Ende verbunden ist, zur Betätigung durch die drehende Bewegung des ersten Hebels.

5. Ein Antriebssystem nach Anspruch 4, mit Mitteln (12) zur Einstellung der Position des dritten Hebels relativ zu der des ersten Hebels, um die Hublänge des Zylinders einzustellen.

6. Ein Antriebssystem nach Anspruch 5 mit einer hydraulischen Einstellvorrichtung (12) zur Einstellung der Position des dritten Hebels.

7. Eine Antriebssystem nach einem der Ansprüche 4 bis 6, **dadurch gekennzeichnet, dass** die hydraulische Antriebspumpe (10) über einen hydraulischen Kreislauf mit einem hydraulischen Motor (17) verbunden ist.

8. Ein Antriebssystem nach Anspruch 7, **dadurch gekennzeichnet, dass** der hydraulische Antriebsmotor (54) ein Verstellmotor ist.

9. Ein Antriebssystem nach Anspruch 7 mit einer Mehrzahl an hydraulischen Motoren (17) und Mitteln (16) zum Anschluss der Motoren einzeln in den hydraulischen Kreislauf, in Serie oder parallel um den Übersetzungseffekt des Antriebssystems einzustellen.

10. Ein Fahrrad mit einem Antriebssystem nach einem der vorhergehenden Ansprüche.

11. Ein Fahrrad nach Anspruch 10 mit einem hydraulischen Antriebsstrang, der mindestens einen hydraulischen Motor für den Antrieb eines oder beider Räder des Fahrrads umfasst.

## Revendications

1. Système d'entraînement apte à être utilisé dans une bicyclette, ledit système d'entraînement incluant un moyen actionnable manuellement (9) et un train d'entraînement raccordé au moyen actionnable manuellement pour transférer l'entraînement depuis le moyen actionnable manuellement (9) jusqu'à au moins une des roues de la bicyclette, dans lequel le moyen actionnable manuellement est monté pour un mouvement alternatif pratiquement rectiligne sur un système de leviers qui inclut un premier levier (1) ayant une première extrémité raccordée à un premier pivot (4) et une seconde extrémité (7) qui peut tourner autour du premier pivot, un second levier (6) ayant une première extrémité qui est raccordée de manière à pouvoir pivoter à la seconde extrémité du premier levier ( 1 ) et une seconde extrémité à laquelle le moyen actionnable manuellement (9) est attaché et une tige d'attache (2) ayant une première extrémité qui est raccordée de manière à pouvoir pivoter à un second pivot (5) et une seconde extrémité qui est raccordée de manière à pouvoir pivoter au second levier entre la première et la seconde extrémité de celui-ci, **caractérisé en ce que** le premier levier (1) est construit et disposé pour une rotation alternative limitée de la seconde extrémité autour du premier pivot (4).

2. Système d'entraînement selon la revendication 1, dans lequel le moyen actionnable manuellement (9) est une pédale.

3. Système d'entraînement selon la revendication 1 ou la revendication 2, incluant deux systèmes de leviers qui sont interconnectés pour un mouvement alternatif opposé, chaque système de levier incluant un moyen actionnable manuellement (9).

4. Système d'entraînement selon la revendication 3, incluant une pompe d'entraînement hydraulique (10) qui est raccordée à un troisième pivot et au premier levier (1), entre la première et la seconde extrémité de celui-ci, pour un actionnement par un mouvement de pivotement du premier levier.

5. Système d'entraînement selon la revendication 4, incluant un moyen (12) pour l'ajustement de la position du troisième pivot par rapport au premier pivot afin d'ajuster la longueur de la course du cylindre.

6. Système d'entraînement selon la revendication 5, incluant un organe de réglage hydraulique (12) pour l'ajustement de la position du troisième pivot.

7. Système d'entraînement selon l'une quelconque des revendications 4 à 6, dans lequel ladite pompe d'entraînement hydraulique (10) est raccordée par l'intermédiaire d'un circuit hydraulique à un moteur hydraulique (17).

8. Système d'entraînement selon la revendication 7, dans lequel ledit moteur d'entraînement hydraulique (54) est un moteur à capacité variable.

9. Système d'entraînement selon la revendication 7, incluant une pluralité de moteurs hydrauliques (17) et de moyens (16) pour raccorder les moteurs dans le circuit hydraulique individuellement, en série ou en parallèle, afin d'ajuster l'effet d'engrenage du système d'entraînement.

10. Bicyclette ayant un système d'entraînement selon l'une quelconque des revendications précédentes.

11. Bicyclette selon la revendication 10, incluant un train d'entraînement hydraulique qui inclut au moins un moteur hydraulique pour entraîner une roue ou les deux roues de la bicyclette.
